(19) Europäisches Patentamt
European Patent Office
Office européen des brevets

(11) EP 4 539 361 A1

(12) EUROPEAN PATENT APPLICATION

(43) Date of publication:
16.04.2025 Bulletin 2025/16

(21) Application number: 24205513.5

(22) Date of filing: 09.10.2024

(51) International Patent Classification (IPC):
H04B 10/61 (2013.01)

(52) Cooperative Patent Classification (CPC):
H04B 10/614; H04B 10/615

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 10.10.2023 US 202363543331 P
22.08.2024 US 202418812380

(71) Applicant: Google LLC
Mountain View, CA 94043 (US)

(72) Inventors:
• ZHOU, Xiang
  Mountain View, 94043 (US)
• LAM, Cedric Fung
  Mountain View, 94043 (US)
• LIU, Hong
  Mountain View, 94043 (US)

(74) Representative: Betten & Resch
Patent- und Rechtsanwälte PartGmbB
Maximiliansplatz 14
80333 München (DE)

(54) **TIME-DIVERSITY POLARIZATION-FOLDING COHERENT OPTICAL TECHNOLOGY FOR OPTICAL COMMUNICATION**

(57)    The technology is generally directed to a time-diversity coherent receiver that reduces power loss associated with using polarization folding to perform spatial diversity to time-diversity conversion. The signal power loss is reduced by using a single optical coupler to perform both joint polarization folding and signal phase-diversity splitting. The optical coupler may receive a first signal portion and a second signal portion from a polarization beam splitter, wherein one of the signal portions has first passed through a time delay module configured to delay said portion by a symbol period or multiple symbol periods. The optical coupler may recombine and fold the first and second signal portions. The output of the optical coupler may be a first combined signal component and a second combined signal component. The first and second combined signal components may be polarization-folded signals. The first and second combined signal components may be transmitted to other optical couplers as part of the receiver.

EP 4 539 361 A1

FIGURE 2A

EP 4 539 361 A1

**Description**

CROSS-REFERENCE TO RELATED APPLICATIONS

This application claims the benefit of the filing date of United States Provisional Patent Application No. 63/543,331, filed October 10, 2023, the disclosure of which is hereby incorporated herein by reference.

BACKGROUND

Coherent optical communication technology typically involves modulating the amplitude and phase of light that is transmitted across two polarization states to transport information over a fiber optic cable. Coherent optical communication technology offers the potential to use more of the available bandwidth of a fiber optic cable or other such transmission paths than competing technologies. In a coherent receiver, the transmitted signal is interfered with using a local oscillator (LO) such that phase information can be extracted from the transmitted signal.

As compared to other forms of optical transmission, such as intensity modulation and direct detection (IM-DD), coherent optical communication technology generally has advantages, such as: higher receiver sensitivity, higher spectral efficiency (SE), and higher tolerance towards various linear optical impairments such as fiber chromatic dispersion (CD) and polarization mode dispersion (PMD). In applications where the state of polarization (SOP) is not maintained during transmission, a phase- and polarization-diversity four-dimensional (4D) vector receiver is typically employed to detect and demodulate the coherently modulated signal. 4D refers to the separate in-phase (I) and quadrature (Q) components of the X-polarized signal and Y-polarized signal, commonly referred to as Ix, Qx for the X-polarized signal, and Iy, Qy for the Y-polarized signal. A coherently modulated signal that is demodulated by a 4D vector receiver is separated into I, Q for each of the X and Y polarized signals. A 4D vector receiver is also typically used when the received signal is only a two-dimensional (2D) modulated optical signal, such as a single polarization (SP) quadrature amplitude modulated (QAM) (SP-QAM) signal or a 1D modulated signal such as a SP-pulse amplitude modulation (SP-PAM) signal.

BRIEF SUMMARY

The technology is generally directed to a time-diversity coherent receiver system having a single optical coupler configured to perform both polarization folding and signal phase-diversity splitting. By having one optical coupler configured to perform both polarization folding and signal phase-diversity splitting, the amount of signal loss relative to using two or more optical couplers to perform polarization folding and signal phase-diversity splitting is reduced. By having a single optical coupler perform both polarization folding and signal phase-diversity splitting, both polarization-folded signals output by the optical coupler may be transmitted to other optical couplers within the receiver system, without any additional components.

The optical coupler may be part of a polarization folding unit, which may also include a polarization beam splitter and a time delay module. The polarization-folding unit converts two spatial-diversity signals (the X-polarized signal and the Y-polarized signal) into a single time-diversity signal, such that the technology described above and herein is a time-diversity coherent system, as compared to conventional space-diversity coherent systems. The polarization-folding technology described above and herein is configured to perform the required space-diversity to time-diversity conversion functionality.

The polarization beam splitter may receive a signal, such as an optical signal from a transmitter. The polarization beam splitter may split the signal into two signal portions in two orthogonal polarization states. A polarization rotator, which may be part of the polarization beam splitter, may rotate one of the two signal portions such that the rotated signal portion and non-rotated signal portion are in corresponding polarization states. For example, the rotated signal portion and the non-rotated signal portion may be in substantially the same polarization state. One signal portion may be transmitted to the optical coupler while the other signal portion may be transmitted to a time delay module before being transmitted to the optical coupler. By having one signal portion delayed, the delayed signal portion and the non-delayed signal portion can be treated as pseudo-independent data sequences such that they will not cancel each other out.

The optical coupler receives the delayed signal portion and the non-delayed signal portion. The optical coupler is configured to recombine and fold the delayed signal portion and the non-delayed signal portions, resulting in two polarization-folded signals. When combining and folding the delayed signal portion and the non-delayed signal portion, the optical coupler may be configured to perform polarization folding and phase-diversity splitting. The output of the optical coupler may include two optical signals that are phase-orthogonal to each other. For example, the optical couple may combine the delayed and the non-delayed signal portion using polarization folding but may, in some examples, also split both the delayed and non-delayed signal portions into two, respectively, phase-orthogonal portions for following phase-diversity coherent detection. In contrast, previous technology required separate optical couples for polarization folding and phase-diversity splitting, e.g., one optical coupler for polarization folding and another optical coupler for phase-diversity

2

splitting.

The technology reduces power loss associated with using polarization folding to perform spatial diversity to time-diversity conversion. The signal power loss is reduced by using a single optical coupler to perform both joint polarization folding and signal phase-diversity splitting. The optical coupler may receive a first signal portion and a second signal portion from a polarization beam splitter. The optical coupler may recombine and fold the first and second signal portions. The output of the optical coupler may be a first combined signal component and a second combined signal component. The first and second combined signal components may be polarization-folded signals. The first and second combined signal components may be transmitted to other optical couplers as part of the receiver.

One aspect of the technology is directed to a receiver system, comprising a polarization folding unit. The polarization folding unit may be a polarization folding based space diversity to time-diversity conversion unit. The polarization folding unit may comprise a polarization beam splitter configured to a first signal from a transmitter and output a first signal component and a second signal component, a time delay module configured to receive the second signal component, and at least one of a first optical coupler or a Mach-Zehnder interferometer optically coupled to the polarization beam splitter and configured to combine the first signal component and the delayed second signal component. The receiver system may further comprise a second optical coupler configured to receive a first combined signal component from the at least one of the first optical coupler or the Mach-Zehnder interferometer, and a third optical coupler configured to receive the second combined signal component from the at least one of the first optical coupler or the Mach-Zehnder interferometer.

At least one of the first optical coupler or the Mach-Zehnder interferometer may be further configured to perform joint polarization folding of the first signal component and the delayed second signal component. The at least one of the first optical coupler or the Mach-Zehnder interferometer may be further configured to perform signal phase-diversity splitting of the first signal component and the delayed second signal component.

At least one of the first optical coupler or the Mach-Zehnder interferometer may be configured to output the first combined signal component and the second combined signal component, wherein the first and second combined signal components are polarization-folded signals.

The originally X-polarized and Y-polarized portions of the second combined signal component may correspond to the first combined signal component having a 90-degree phase shift. The time delay module is configured to delay the second signal component by a symbol period or multiple symbol periods relative to the first signal component.

The receiver system may further comprise a fourth optical coupler configured to receive a second signal from a local oscillator, transmit a first signal component of the second signal to the second optical coupler, and transmit a second signal component of the second signal to the third optical coupler.

The polarization beam splitter includes a polarization rotator configured to rotate the first signal component or the second signal component. Rotating the first signal component may include rotating the first signal component to a polarization state corresponding to the polarization state of the second signal component. Rotating the second signal component may include rotating the second signal component to the polarization state corresponding to the polarization state of the first signal component.

Another aspect of the technology is directed to a method, comprising receiving, by a polarization beam splitter, a first signal, outputting, by the polarization beam splitter, a first signal component and a second signal component, receiving, by a time delay module, the second signal component, combining, by at least one of a first optical coupler or a Mach-Zehnder interferometer, the first signal component and the delayed second signal component, receiving, by a second optical coupler from the at least one of the first optical coupler or the Mach-Zehnder interferometer, a first combined signal component, and receiving, by a third optical coupler from the at least one of the first optical coupler or the Mach-Zehnder interferometer, a second combined signal component.

Yet another aspect of the technology is directed to an optical transmission system, comprising a transmitter configured to output 1D or 2D encoded signals. The transmitter may comprise a laser and a modulator. The optical transmission system may further comprise a receiver, comprising a polarization folding unit configured to receive the encoded signal from the transmitter. The polarization folding unit may comprise a polarization beam splitter configured to receive a first signal from a transmitter and output a first signal component and a second signal component, a time delay module configured to receive the second signal component, and at least one of a first optical coupler or a Mach-Zehnder interferometer optically coupled to the polarization beam splitter and configured to combine the first signal component and the delayed second signal component. The optical transmission system may further comprise a second optical coupler configured to receive a first combined signal component from the at least one of the first optical coupler or the Mach-Zehnder interferometer, and a third optical coupler configured to receive the second combined signal component from the at least one of the first optical coupler or the Mach-Zehnder interferometer.

BRIEF DESCRIPTION OF THE DRAWINGS

Figure 1 is a block diagram of an example receiver system in accordance with aspects of the disclosure.
Figure 2A is a block diagram of an example polarization folding unit in accordance with aspects of the disclosure.
Figure 2B is a block diagram of an example polarization folding unit in accordance with aspects of the disclosure.
Figure 3 is a block diagram of an example transmitter system in accordance with aspects of the disclosure.
Figure 4 is a block diagram of another example receiver system in accordance with aspects of the disclosure.
Figure 5 is a block diagram of an example device according to aspects of the disclosure.
Figure 6 is a flow diagram illustrating an example method in accordance with aspects of the disclosure.

DETAILED DESCRIPTION

The technology is generally directed to a receiver that reduces power loss associated with polarization folding. The receiver may be one-dimensional (1D), two-dimensional (2D), intensity modulation and direct detection (IM-DD), or the like. The signal power loss is reduced by using a single optical coupler to perform both joint polarization folding and signal phase-diversity splitting. The optical coupler may be configured to receive a first signal portion and a second signal portion formed by a polarization beam splitter (PBS). A polarization rotator, which may be part of the PBS or a separate component, may be used to rotate the first signal portion or the second signal portion to have a polarization state substantially corresponding to the polarization state of the second signal portion or the first signal portion, respectively. In some examples, after one of the signal portions is rotated, the state of polarization of the two optical signal components entering the optical coupler are substantially the same. Accordingly, without the polarization rotator, the first and second signal portions may be in two orthogonal polarization states, e.g., an X-polarized portion and a Y-polarized portion. However, with the polarization rotator, the first and second signal portions may have substantially the same state of polarization.

The optical coupler may be configured to recombine and/or fold the first and second signal portions. For example, the optical coupler may be configured to perform joint polarization folding and signal phase-diversity splitting. When performing polarization folding, the optical coupler may be configured to add the second signal portion into the first portion or vice versa. When performing phase-diversity splitting, the optical coupler may be configured to split the combined (or polarization-folded signal) signal (of the first and second portion) into two equal and phase-orthogonal portions to be sent to two independent coherentmixing couplers. The combined signal may, in some examples, be the polarization folded signal. The polarization folded signal may be, for example, the combined first and second signal portions.

According to some examples, the optical coupler may perform j oint polarization folding and signal phase-diversity splitting at the same time by using a single optical coupler. The output of the optical coupler may be a first combined signal component and a second combined signal component. The first and second combined signal components may be polarization-folded signals. According to some examples, the first and second combined signal components may consist of two phase-orthogonal signal components: both the combined signals consist of the originally X-polarized portion and the originally Y-polarized and T-delayed portion, but the phase of the originally X-polarized portion in the first combined signal is orthogonal to the originally X-polarized portion in the second combined signal, and the phase of the originally Y-polarized portion in the first combined signal is also orthogonal to the originally Y-polarized portion in the second combined signal. The first and second combined signal components may be transmitted to other optical couplers as part of the receiver.

The reduction in signal power loss provides for a smoother transition from direct detection to coherent detection in DC interconnection networks, e.g., from 200Gb/s per wavelength to 400GB/s per wavelength. The coherent receiver described herein may enable lower cost mobile front and/or middle haul, fiber access networks, or the like.

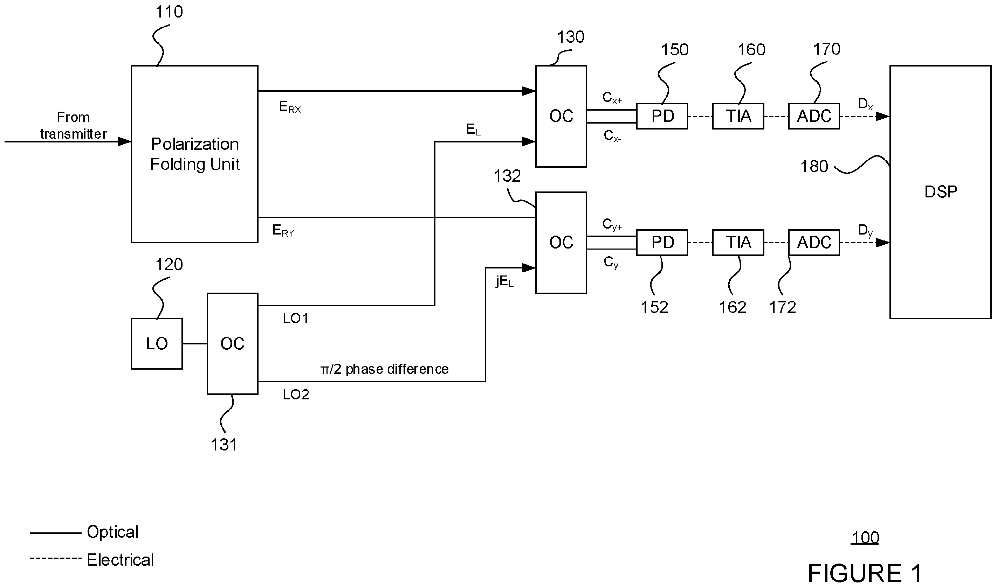

Figure 1 shows an example receiver system 100 with mixed optical and electrical signal processing through joint polarization-diverse and phase-diverse detection. The receiver system 100 includes a polarization folding unit 110, a local oscillator ("LO"), a digital signal processor ("DSP"), 3 optical couplers ("OCs"), and 2 sets of photodetectors ("PDs"), transimpedance amplifiers ("TIAs"), and analog to digital converters ("ADCs").

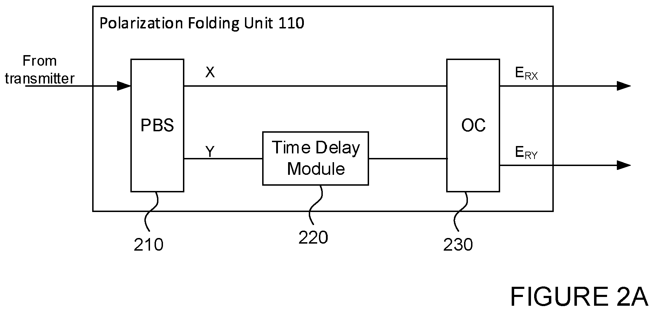

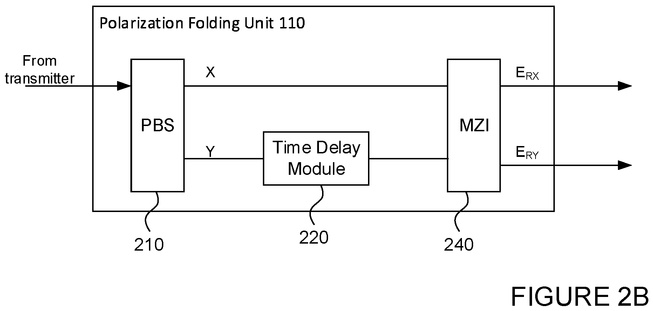

Referring to Figures 2A and 2B, the polarization folding unit 110 is configured to receive modulated optical signals from a transmitter. The polarization folding unit 110 may be a polarization folding based space diversity to time-diversity conversion unit. For example, the polarization folding unit may be configured to perform spatial diversity to time-diversity conversion. The receiver system 100 may, therefore, may be a time-diversity coherent receiver.

The polarization folding unit 110 includes a polarization beam splitter 210, time delay module 220. As shown in Figure 2A, the polarization folding unit 110 further includes an optical coupler 230. In Figure 2B, the polarization folding unit 110 includes a Mach-Zender interferometer ("MZI") 240 instead of the optical coupler 230. The MZI 240 may be configured to perform substantially the same functions as the optical coupler 230. Accordingly, any reference to optical coupler 230 can be interchanged with MZI 240. The use of optical coupler 230 instead of MZI 240 is, therefore, not intended to be limiting.

The PBS 210 separates the received modulated optical signals into two orthogonal polarization states, *e.g.,* the X-polarized portion (X) and the Y-polarized portion (Y). The PBS 210 may include a polarization rotator to rotate the Y-polarized signal into a X-polarized signal, or vice versa, such that the two outputs of the PBS 210 are at substantially the same state of polarization.

One of the signal portions, e.g., X or Y, output by PBS 210 may be transmitted to the time delay module 220 and the other signal portion may be transmitted to the optical coupler 230. The time delay module may delay the received signal portion by a symbol period (T), or multiple symbol periods. As an example, and as illustrated in Fig. 2A, the Y-polarized signal portion (Y) is transmitted to the time delay module 220 and delayed by symbol period T. The delayed signal portion is then sent to the optical coupler 230.

The non-delayed signal portion, *e.g.,* X, and the delayed signal portion, *e.g.,* Y, as illustrated in Fig. 2A, may be recombined via optical coupler 230. For example, the optical coupler 230 may be configured to recombine the signal portions using joint polarization folding.

The optical coupler 230 may be configured to output two polarization-folded signals formed by the joint polarization folding. For example, an upper output signal, $E_{RX}$, and a lower output signal, $E_{RY}$, may be formed by the optical coupler 230 performing joint polarization folding. The upper output signal may correspond to half of the original X-polarized portion plus half of the Y-polarized portion folded into the X-polarized portion. The lower output signal may correspond to half of the Y-polarized portion plus half of the X-polarized portion folded into the Y-polarized portion.

The optical coupler 230 may, additionally, be configured to perform signal phase-diversity splitting. Phase-diversity splitting is needed for a typical digital coherent receiver where the phase of the incoming signal is not dynamically adjusted in the optical domain. The phase-diversity splitting, performed by optical coupler 230, splits the incoming optical signal into two phase-orthogonal portions: one with a first optical phase and another one with 90 degree phase relative to the first optical phase. Then homodyne or intradyne detection is applied to both the phase-orthogonal portions. Without phase diversity detection, a high-speed optical phase control loop has to be introduced to dynamically align the phase of the incoming signal with the local oscillator, but a high-speed optical phase control loop can be very challenging to implement in reality.

Typically, to utilize both the upper output signal and lower output signal, two separate phase-diversity coherent receivers are required, which not only increases the complexity to implement the receiver but also doubles the power consumption by the transimpedance amplifiers (TIAs) and analog-to-digital converters (ADCs). However, by using the first optical coupler to perform joint polarization folding and signal phase diversity splitting, the upper output signal and the lower output signal can be utilized without any additional components. For example, as the X- and Y-polarization portions are delayed by at least a symbol period T, the X- and Y-polarization portions can be treated as pseudo-independent data sequences. As pseudo-independent sequences, the X- and Y-polarization portions will not cancel out each other after polarization folding is completed, and moreover, the upper output signal and the lower output signal of the optical coupler will have an effectively orthogonal phase relationship. The first optical coupler, therefore, can be configured to perform polarization-folding and phase-diversity splitting simultaneously. In contrast, previous technology required polarization-folding and phase-diversity splitting to be completed by separate optical couplers.

According to some examples, using a single optical coupler, *e.g.,* optical coupler 230, to perform both polarization-folding and phase-diversity splitting reduces the receiver's complexity by reducing the number of components that comprise the receiver. For example, previous receivers include five optical couplers, including an optical coupler configured to transmit either the upper output signal or the lower output signal to a 90-degree hybrid, which includes four optical couplers. In contrast, the technology described herein has four optical couplers, including an optical coupler configured to transmit both the upper output signal and the lower output signal, and three additional optical couplers. Accordingly, the number of optical couplers is reduced.

The polarization folding unit 110 may be a passive polarization-processing system rather than an active system. An active polarization processing system may be, for example, a system that requires a controller and feedback loop. For example, a polarization controller that includes a PBS, phase shifter, and optical coupler may be an active polarization processing system. The phase shifter may require a feedback control loop to continuously adjust the phase shift to ensure that the output polarization of the active polarization-processing unit is aligned to a target/known polarization, for example, the launched state of polarization at the transmitter side for a communication system. As the temperature and/or mechanical stress conditions of the transmission system (such as the fiber) changes, the received state of polarization of the signal may be altered. The feedback loop may be used to dynamically adjust the phase shift to rotate the state of the polarization of the received signal in order to align to the transmitter signal polarization. In contrast, the polarization folding unit 110 includes a time delay module 220, instead of a phase shifter. The time delay module 220 does not require a feedback loop as the time delay is steady, regardless of changes to the system, *e.g.*, temperature or mechanical stress changes. In other words, the polarization folding unit 110 does not perform polarization alignment function (align the receiver polarization to the transmitter polarization), while the active polarization processing typically performs polarization alignment function.

Referring back to Figure 1, the polarization folding unit 110 may be configured to receive a signal from a transmitter. The signal may be, in some examples, a 2-D QAM modulated signal, 1-D PAM modulated signal, or the like. As discussed with reference to Figure 2, the PBS 210 may separate the received signal into two orthogonal polarization states. A polarization rotator within the PBS 210 and/or coupled to PBS 210 may rotate one of the signal portions output by the PBS 210. The rotated signal portion may be rotated such that the polarization state of the rotated signal portion substantially corresponds to the polarization state of the non-rotated signal portion. One signal portion may be delayed via time delay module 220. The non-delayed and delayed signal portions may be recombined via optical coupler 230. The optical coupler 230 and, therefore, polarization folding unit 110 may output two polarization folded signals, $E_{RX}$ and $E_{RY}$.

The two polarization folded signals may be an upper output signal and a lower output signal. The upper output signal may be, for example, $E_{RX}$ and the lower output signal may be, for example, $E_{RY}$. The upper output signal and the lower output signal may be transmitted to other optical couplers. For example, the upper output signal may be transmitted to optical coupler 130 and the lower output signal may be transmitted to optical coupler 132. Using a single optical coupler, *e.g.,* optical coupler 230, to perform both polarization-folding and phase-diversity splitting allows for both portions of the signal output by the optical coupler, e.g., the upper output signal, $E_{RX}$, and a lower output signal, $E_{RY}$, to be utilized. This negates previous losses by the receiver, which previously utilized either the upper output signal or the lower output signal.

Further as shown, the LO signal from LO 120 may be split by OC 131 into two signals, LO1 and LO2. OC 131 may introduce a $\pi/2$ phase difference between LO1 and LO2. For example, a 3dB OC that separates a beam using a cross path and a parallel path may have a $\pi/2$ phase difference between the two paths. Then, OC 130 may mix $E_{RX}$ with LO1, and generate two outputs Cx+ and Cx-. Likewise, OC 432 may mix the $E_{RY}$ with LO2, and generate two outputs $C_{Y+}$ and $C_Y$.

Outputs from OC 130 and OC 132 are then respectively passed through PDs 150, 152 for optical to electrical conversion, TIAs 160, 162 for amplification, and ADCs 170, 172 for electrical to digital conversion, resulting in two digitized electrical signals Dx and $D_Y$. The digitized electrical signals $D_X$ and $D_Y$ may be transmitted to the DSP.

The DSP 180 may resolve the polarization between the different signal components Dx and $D_Y$. For example, because the delayed signal portion is folded back into the other signal portion, e.g., the non-delayed signal portion, the DSP 180 may resolve the differences in the polarization between the two signal portions. In contrast, if the polarization folding unit was an active system, e.g., the polarization controller discussed above, that included a phase shifter instead of a time delay module, the polarization controller would resolve the polarization between the two signal portions rather than the DSP 180. According to some examples, the DSP 180 may be a coherent PAM DSP.

The receiver system 100 mitigates the 3dB signal power loss by using a single 3dB coupler, *e.g.,* optical coupler 230, to perform joint polarization folding and signal phase-diversity splitting. The signal power loss is mitigated as, before polarization folding, the X-and Y-polarization portions are already delayed by a symbol period via time delay module 220 and, therefore, can be treated as two pseudo independent data sequences (no signal canceling after polarization folding operation). The optical coupler 230 in the polarization folding unit 110, therefore, not only performs the desired polarization-folding operation, but also performs the desired phase diversity splitting operation simultaneously.

As an example, the receiver 100 may receive a 2-D modulated optical signal. The 2-D modulated optical signal may be represented by:

$$\hat{E}_R(t) = [I(t) + jQ(t)]\hat{x}$$

In such an equation, I(t) and Q(t) may correspond to the in-phase and quadrature components of the optical signal, and x̂ may correspond to the X polarization. For simplicity, the carrier phase is neglected here. For short-reach optical communication systems using optical fiber as the optical transmission medium, the state of polarization (SOP) of the transmitted signal may change during transmission, and the polarization matrix linking the output signals to the input signals are unitary and can be modeled as a 2x2 matrix with only two independent angle parameters, $\alpha$ and $\theta$:

$$U = \begin{pmatrix} cos\alpha & sin\alpha e^{j\theta} \\ -sin\alpha e^{-j\theta} & cos\alpha \end{pmatrix}$$

The received polarization-rotated 4D vector optical signal may be expressed as:

$$\hat{E}_R(t) = \square\square\square(\square) \ [I(t) + jQ(t)]\hat{x} \ - \ \square\square\square(\square)e^{-J\theta} \ [I(t) + jQ(t)]\hat{y}$$

After polarization-splitting by the PBS 210, the symbol T delay in the Y-polarization signal potion (from time delay module 220), and recombining by the 3dB optical coupler 230, the two outputs of optical coupler 230, $E_{RX}$ and $E_{RY}$, may be expressed as:

$$\hat{E}_{Rx}(t) = \frac{\sqrt{2}}{2} cos \ (\alpha) \ [I(t) + jQ(t)] \ - \ \frac{\sqrt{2}}{2} sin \ (\alpha)e^{-J\theta + j\frac{\pi}{2}} [I(t\text{-}T) + jQ(t\text{-}T)]$$

$$\hat{E}_{RY}(t) = \frac{\sqrt{2}}{2} cos\ (\alpha)\ [I(t) + jQ(t)]\ e^{J\frac{\pi}{2}} - \frac{\sqrt{2}}{2} sin(\alpha)e^{-J\theta}\ [I(t\text{-T}) + jQ(t\text{-T})]$$

The first portion of $E_{RX}$ and the first portion of $E_{RY}$ both denote the originally transmitted signal (scaled) with $\frac{\pi}{2}$ phase difference, while the second portions of $E_{RX}$ and $E_{RY}$ denote the T-delayed and scaled copies, also with 2 phase difference. This indicates the phase orthogonality between $E_{RX}$ and $E_{RY}$. This may indicate that the polarization folding coupler, *e.g.,* optical coupler 230, not only performs the polarization-folding functionality, but also performs the phase-diversity splitting functionality that is needed for a 2-D phase-diversity coherent receiver.

As an example, $E_L$ may correspond to the LO field. For simplicity, the LO phase noise is not included. After balanced photodetection of the two phase-orthogonal signals, $E_{RX}$ and $E_{RY}$, the received electrical signal entering into the partial-response signal recovery DSP 180 may be expressed as: $E_r(t) = E_L cos(\alpha)[jI(t) + Q(t)] - E_L sin(\alpha)e^{-J\theta}[I(t\text{-T}) + jQ(t\text{-T})]$

From the above equation, the received signal may be equivalent to a two-tap partial response coded signal and, therefore, can be recovered by classic partial response signal methods. Classic partial response signal recovery methods may include, for example, Maximum likelihood sequence estimation ("MLSE") based methods.

The receiver system 100 is a more efficient multi-wavelength receiver than a polarization-diverse and phase-diverse receiver system. For instance, the receiver system 100 requires 2 sets of PDs, TIAs, and ADCs, as compared to the 4 sets required by conventional polarization-diverse and phase-diverse receiver systems. The receiver system 100 also uses only four optical couples, as compared to the at least five optical couplers in previous systems. For example, previous receiver systems included at least five optical couplers, including an optical coupler configured to transmit either the upper output signal ($E_{RX}$) or the lower output signal ($E_{RY}$) to a 90-degree hybrid, which includes four optical couplers. In contrast, the receiver system 100 has only four optical couplers, including optical coupler 230 which is configured to transmit both the upper and lower output signals, *e.g.*, $E_{RX}$ and $E_{RY}$.

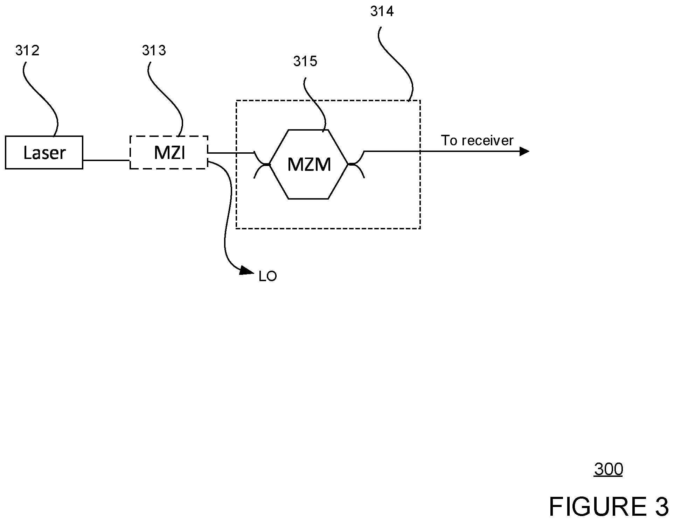

Additionally, the receiver system 100 enables current generation coherent and pregeneration IM-DD backward interoperation, which is critical for DC interconnection networks. Figure 3 illustrates an example dual coherent and IM-DD transceiver 300 architecture. Transmitter 300 may include a light source 312, such as laser, and a modulator 314. The modulator 314 may, in some examples, include a Mach-Zehnder modulator ("MZM") 315. According to some examples, the modulator 314 may be a quadrature amplitude modulated (QAM) modulator, amplitude-phase shift keying (APSK) modulator, or a pulse amplitude modulation (PAM) modulator.

According to some examples, such as when there is a single light source 312 and the LO 120 of the receiver system 100 shares the light source 312, the transmitter 300 may include a Mach-Zehnder interferometer ("MZI") 313 based tunable power splitter. The MZI 313 may be configured to optimize the power utilization of the light source 312 for both coherent and IM-DD modes.

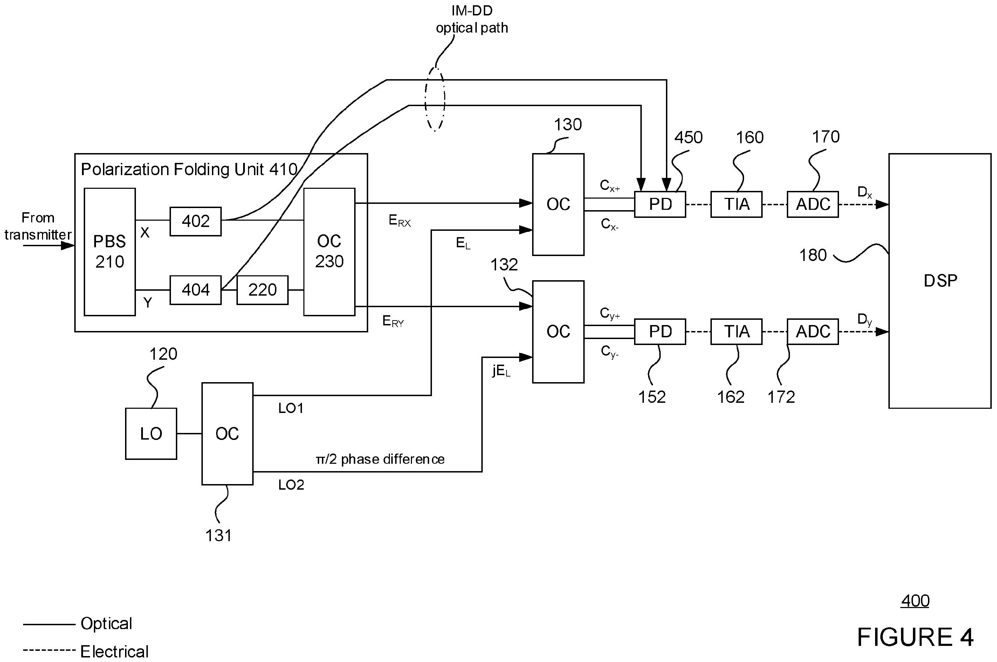

For a dual-coherent/IM-DD receiver, two MZI based 1x2 optical switches may be introduced into the polarization folding unit. Figure 4 illustrates an example optical receiver system in which the polarization folding unit 410 includes two MZIs. The receiver system 400 of Figure 4 is substantially similar to the receiver system 100 of Figure 1 and polarization folding unit 110 of Figure 2. Figure 4 differs from Figure 1 and Figure 2 in that the polarization folding unit 410 includes two MZIs 402, 404. The MZIs 402, 404 may be configured to direct route the X- and Y-polarized signal components to a multi-port PD for IM-DD reception. For example, the X- and Y-polarized signal components transmitted by the MZIs 402, 404 may be routed to PD 450 via an IM-DD optical path. PD 450 may be a multi-port input PD configured for IM-DD reception.

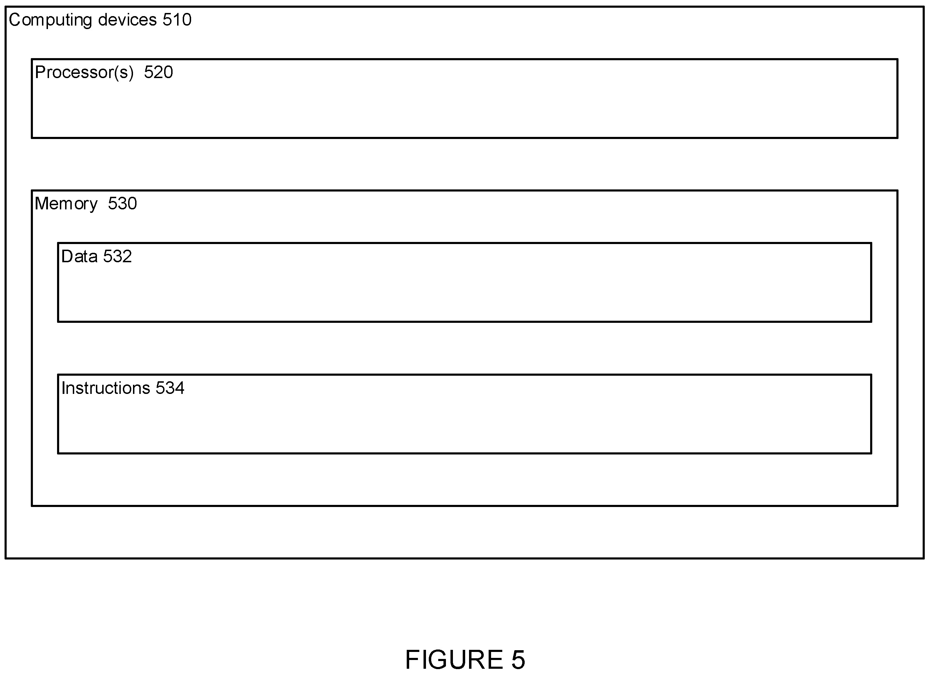

Figure 5 illustrates an example block diagram of some components in a receiver system, such as receiver system 100 or 400. It should not be considered as limiting the scope of the disclosure or usefulness of the features described herein. In this example, the receiver system is shown with one or more computing devices 510. The computing devices 510 contains one or more processors 520, memory 530 and other components typically present in general purpose computing devices. Memory 530 of the computing devices 510 can store information accessible by the one or more processors 520, including instructions 534 that can be executed by the one or more processors 520.

Memory 530 can also include data 532 that can be retrieved, manipulated or stored by the processor. The memory can be of any non-transitory type capable of storing information accessible by the processor, including a non-transitory computer-readable medium, or other medium that stores data that may be read with the aid of an electronic device, such as a harddrive, memory card, read-only memory ("ROM"), random access memory ("RAM"), optical disks, as well as other write-capable and read-only memories. Memory 530 may store information that is accessible by the processors 520, including instructions 534 that may be executed by processors 520, and data 532. For example, the data 532 may include parameters, thresholds, and other values for performing polarization, frequency, and/or phase recovery.

Data 532 may be retrieved, stored, or modified by the one or more processors 520 in accordance with the instructions 534. For instance, although the subject matter described herein is not limited by any particular data structure, the data can be stored in computer registers, in a relational database as a table having many different fields and records, or XML documents. The data can also be formatted in any computing device-readable format such as, but not limited to, binary values, ASCII or Unicode. Moreover, the data can comprise any information sufficient to identify the relevant information, such as numbers, descriptive text, propriety codes, pointers, references to data stored in other memories such as at other network locations, or information that is used by a function to calculate the relevant data.

The instructions 534 can be any set of instructions to be executed directly, such as machine code, or indirectly, such as scripts, by the one or more processors. In that regard, the terms "instructions," "application," "steps," and "programs" can be used interchangeably herein. The instructions can be stored in object code format for direct processing by a processor, or in any other computing device language including scripts or collections of independent source code modules that are interpreted on demand or compiled in advance. For instance, the instructions 534 may include functions or methods for performing polarization, frequency, and/or phase recovery.

The one or more processors 520 can be any conventional processors, such as a commercially available CPU. Alternatively, the processors can be dedicated components such as an application specific integrated circuit ("ASIC") or other hardware-based processor. For example, DSP 180 may be configured as the one or more processors 520, with access to memory such as data and instructions. Although not necessary, one or more of the computing devices 510 may include specialized hardware components to perform specific computing processes.

Although Figure 5 functionally illustrates the processor, memory, and other elements of computing devices 510 as being within the same block, the processor, computer, computing device, or memory can actually comprise multiple processors, computers, computing devices, or memories that may or may not be stored within the same physical housing. For example, the memory can be a hard drive or other storage media located in housings different from that of the computing devices 510. Accordingly, references to a processor, computer, computing device, or memory will be understood to include references to a collection of processors, computers, computing devices, or memories that may or may not operate in parallel. For example, the computing devices 510 may include server computing devices operating as a loadbalanced server farm, distributed system, etc. Yet further, although some functions described below are indicated as taking place on a single computing device having a single processor, various aspects of the subject matter described herein can be implemented by a plurality of computing devices, for example, communicating information over a network.

The computing devices 510 may be capable of directly and indirectly communicating with other transmitter systems and/or receiver systems over a network. Computing devices in a network, such as computing devices 510, may be interconnected using various protocols and systems, such that computing devices in the network can be part of the Internet, World Wide Web, specific intranets, wide area networks, or local networks. Computing devices in the network can utilize standard communication protocols, such as Internet, World Wide Web, intranets, virtual private networks, wide area networks, local networks, and private networks using communication protocols proprietary to one or more companies. The network can support a variety of short- and long-range connections. The short- and long-range connections may be made over different bandwidths, such as 2.402 GHz to 2.480 GHz, commonly associated with the Bluetooth® standard, 2.4 GHz and 5 GHz, commonly associated with the Wi-Fi® communication protocol; or with a variety of communication standards, such as the LTE® standard for wireless broadband communication. The network, in addition or alternatively, can also support wired connections between the devices and the data center, including over various types of Ethernet connection. Although certain advantages are obtained when information is transmitted or received as noted above, other aspects of the subject matter described herein are not limited to any particular manner of transmission.

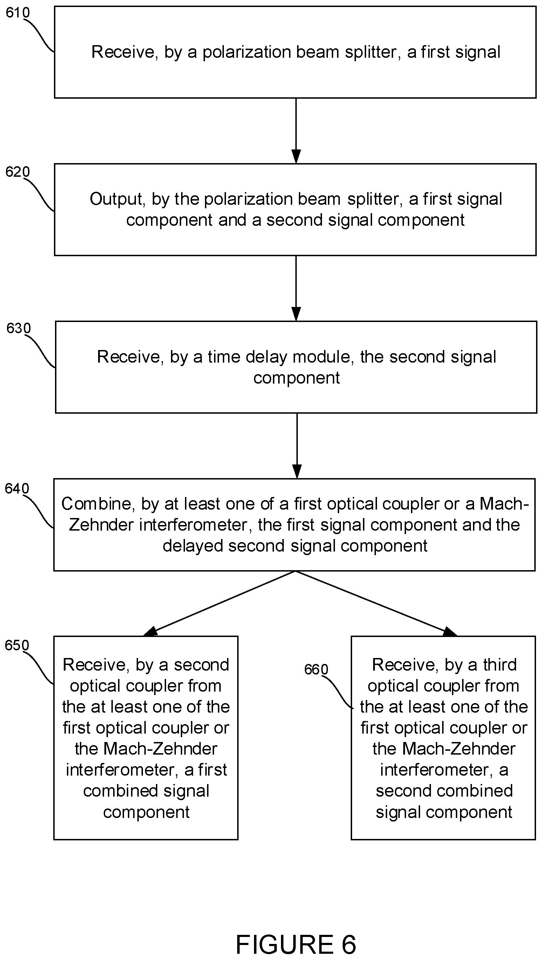

Figure 6 depicts a flow diagram of an example process for receiving an optical signal. The following operations do not have to be performed in the precise order described below. Rather, various operations can be handled in a different order or simultaneously, and operations may be added or omitted.

In block 610, a polarization beam splitter may receive a first signal. The polarization beam splitter may be part of a polarization folding unit. The polarization folding unit may be, for example, a polarization based space-diversity to time-diversity conversion unit.

In block 620, the polarization beam splitter may output a first signal component and a second signal component. According to some examples, the polarization beam splitter may include a polarization rotator. The polarization rotator may rotate the first signal component or the second signal component. For example, if the polarization rotator rotates the first signal component, the first signal component may be rotated to a polarization state corresponding to the polarization state of the un-rotated second signal component. If the polarization rotator rotates the second signal component, the second signal may be rotated to a polarization state corresponding to the polarization state of the un-rotated first signal component.

In block 630, a time delay module may receive the second signal component. For example, the time delay module may receive the second signal component from the polarization beam splitter. The time delay module may be configured to delay the second signal component by a symbol period relative to the first signal component. The signal period may be "T." According to some examples, the delayed second signal component may correspond to the first signal component having a 90-degree phase shift.

In block 640, the first signal component and the delayed second signal component may be combined by at least one of a first optical coupler or an MZI. In some examples, when combining the first signal component and the delayed second signal component, the first optical coupler and/or MZI may output a first combined signal component and a second combined signal component. The first and second combined signal components may be, for example, polarization-folded signals. For example, the first optical coupler and/or MZI may be configured to perform joint polarization folding. According to some examples, the first optical coupler and/or MZI may be configured to perform signal phase-diversity splitter. The first optical coupler and/or MZI may be configured to perform joint polarization folding and signal phase-diversity splitting substantially simultaneously.

In block 650, a second optical coupler may receive the first combined signal component from the first optical coupler and/or MZI.

In block 660, a third optical coupler may receive the second combined signal component from the first optical coupler and/or MZI.

According to some examples, a fourth optical coupler may receive a second signal from a local oscillator. The fourth optical coupler may split the second signal into two signal components. The second optical coupler may receive a first signal component of the second signal from the fourth optical coupler. The third optical coupler may receive a second signal component of the second signal from the fourth optical coupler.

The output of the second optical coupler may be transmitted to a first PD for optical to electrical conversion. The output of the first PD may be transmitted to a first TIA for amplification. The output of the first TIA may be transmitted to a first ADC for electrical to digital conversion. The digital output of the first ADC may be transmitted to a DSP for processing. Similarly, the output of the third optical coupler may be transmitted to a second PD for optical to electrical conversion. The output of the second PD may be transmitted to a second TIA for amplification. The output of the second TIA may be transmitted to a second ADC for electrical to digital conversion. The digital output of the second ADC may be transmitted to the DSP for processing. According to some examples, the DSP may resolve the polarization between the different signal components.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A receiver system, comprising:

   a polarization folding unit comprising:

   a polarization beam splitter configured to a first signal from a transmitter and output a first signal component and a second signal component;
   a time delay module configured to receive the second signal component; and
   at least one of a first optical coupler or a Mach-Zehnder interferometer optically coupled to the polarization beam splitter and configured to combine the first signal component and a delayed second signal component;

   a second optical coupler configured to receive a first combined signal component from the at least one of the first optical coupler or the Mach-Zehnder interferometer; and
   a third optical coupler configured to receive a second combined signal component from the at least one of the first optical coupler or the Mach-Zehnder interferometer.

2. The receiver system of claim 1, wherein the at least one of the first optical coupler or the Mach-Zehnder interferometer is further configured to perform joint polarization folding of the first signal component and the delayed second signal component, wherein the at least one of the first optical coupler or the Mach-Zehnder interferometer is optionally further configured to perform signal phase-diversity splitting of the first signal component and the delayed second signal component.

3. The receiver system of any one of claims 1 or 2, wherein the at least one of the first optical coupler or the Mach-Zehnder interferometer is configured to output the first combined signal component and the second combined signal component, wherein the first and second combined signal components are polarization-folded signals.

4. The receiver system of any one of the preceding claims, wherein originally X-polarized and Y-polarized portions of the second combined signal component correspond to the first combined signal component having a 90-degree phase shift.

5. The receiver system of any one of the preceding claims, wherein the time delay module is configured to delay the second signal component by a symbol period or multiple symbol periods relative to the first signal component, and/or further comprising a fourth optical coupler configured to:

   receive a second signal from a local oscillator;
   transmit a first signal component of the second signal to the second optical coupler; and
   transmit a second signal component of the second signal to the third optical coupler.

6. The receiver system of any one of the preceding claims, wherein the polarization beam splitter includes a polarization rotator configured to rotate the first signal component or the second signal component, optionally wherein:

   rotating the first signal component includes rotating the first signal component to a polarization state corresponding to the polarization state of the second signal component, or
   rotating the second signal component includes rotating the second signal component to the polarization state corresponding to the polarization state of the first signal component.

7. The receiver system of any one of the preceding claims, wherein the polarization folding unit is a polarization folding based space diversity to time-diversity conversion unit.

8. A method, comprising:

   receiving, by a polarization beam splitter, a first signal;
   outputting, by the polarization beam splitter, a first signal component and a second signal component;
   receiving, by a time delay module, the second signal component;
   combining, by at least one of a first optical coupler or a Mach-Zehnder interferometer, the first signal component and a delayed second signal component;
   receiving, by a second optical coupler from the at least one of the first optical coupler or the Mach-Zehnder interferometer, a first combined signal component; and
   receiving, by a third optical coupler from the at least one of the first optical coupler or the Mach-Zehnder interferometer, a second combined signal component.

9. The method of claim 8, further comprising performing joint polarization folding, by the at least one of the first optical coupler or the Mach-Zehnder interferometer, the first signal component and the delayed second signal component, optionally further comprising performing signal phase-diversity splitting, by the at least one of the first optical coupler or the Mach-Zehnder interferometer, of the first signal component and the delayed second signal component.

10. The method of any one of claims 8 or 9, wherein when combining the first signal component and the delayed second signal component, the method further comprises outputting, by the at least one of the first optical coupler or the Mach-Zehnder interferometer, the first combined signal component and the second combined signal component, wherein the first and second combined signal components are polarization-folded signals.

11. The method of any one of claims 8 to 10, wherein originally X-polarized and Y-polarized portions of the second combined signal component correspond to the first combined signal component having a 90-degree phase shift, and/or further comprising delaying, by the time delay module, the second signal component by a symbol period or multiple symbol period relative to the first signal component.

12. The method of any one of claims 8 to 11, further comprising:

   receiving, by a fourth optical coupler, a second signal from a local oscillator;
   receiving, by the second optical coupler from the fourth optical coupler, a first signal component of the second signal; and
   receiving, by the third optical coupler from the fourth optical coupler, a second signal component of the second signal.

13. The method of any one of claims 8 to 12, further comprising rotating, by a polarization rotator in the polarization beam splitter, the first signal component or the second signal component.

14. The method of claim 12, wherein:

rotating the first signal component includes rotating the first signal component to a polarization state corresponding to the polarization state of the second signal component, or
rotating the second signal component includes rotating the second signal component to the polarization state corresponding to the polarization state of the first signal component.

15. An optical transmission system, comprising:

a transmitter configured to output 1D or 2D encoded signals, the transmitter comprising:

a laser;
a modulator; and

a receiver, comprising:

a polarization folding unit configured to receive the encoded signal from the transmitter, the polarization folding unit comprising:

a polarization beam splitter configured to receive a first signal from the transmitter and output a first signal component and a second signal component;
a time delay module configured to receive the second signal component; and
at least one of a first optical coupler or a Mach-Zehnder interferometer optically coupled to the polarization beam splitter and configured to combine the first signal component and a delayed second signal component;

a second optical coupler configured to receive a first combined signal component from the at least one of the first optical coupler or the Mach-Zehnder interferometer; and
a third optical coupler configured to receive a second combined signal component from the at least one of the first optical coupler or the Mach-Zehnder interferometer.

FIGURE 1

Polarization Folding Unit 110

From transmitter

PBS

X

Y

Time Delay Module

OC

$E_{RX}$

$E_{RY}$

210

220

230

FIGURE 2A

Polarization Folding Unit 110

From transmitter

210 — PBS

Y

X

220 — Time Delay Module

240 — MZI

$E_{RY}$

$E_{RX}$

FIGURE 2B

314

315

MZM

To receiver

313

MZI

LO

312

Laser

300

FIGURE 3

IM-DD optical path

Polarization Folding Unit 410

From transmitter → PBS 210

PBS X → 402 → OC 230
PBS Y → 404 → 220 → OC 230

OC 230 → $E_{RX}$ → OC 130
OC 230 → $E_{RY}$ → OC 132

130

OC 130 → $C_{x+}$, $C_{x-}$ → PD 450 ---- TIA 160 ---- ADC 170 → $D_x$ → DSP 180

$E_L$ → OC 130

132

OC 132 → $C_{y+}$, $C_{y-}$ → PD 152 ---- TIA 162 ---- ADC 172 → $D_y$ → DSP

$jE_L$ → OC 132

120

LO → OC → LO1
OC → LO2
π/2 phase difference

131

400

—— Optical
------- Electrical

FIGURE 4

EP 4 539 361 A1

16

EP 4 539 361 A1

Computing devices 510

Processor(s) 520

Memory 530

Data 532

Instructions 534

FIGURE 5

EP 4 539 361 A1

**610** Receive, by a polarization beam splitter, a first signal

**620** Output, by the polarization beam splitter, a first signal component and a second signal component

**630** Receive, by a time delay module, the second signal component

**640** Combine, by at least one of a first optical coupler or a Mach-Zehnder interferometer, the first signal component and the delayed second signal component

**650** Receive, by a second optical coupler from the at least one of the first optical coupler or the Mach-Zehnder interferometer, a first combined signal component

**660** Receive, by a third optical coupler from the at least one of the first optical coupler or the Mach-Zehnder interferometer, a second combined signal component

FIGURE 6

18

## EUROPEAN SEARCH REPORT

Application Number

EP 24 20 5513

**Europäisches Patentamt**
**European Patent Office**
**Office européen des brevets**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 641 248 B2 (GOOGLE LLC [US]) 2 May 2023 (2023-05-02) * column 9, line 29 - column 12, line 58 * * figure 2 * | 1-15 | INV. H04B10/61 |

TECHNICAL FIELDS SEARCHED (IPC)

H04B

The present search report has been drawn up for all claims

| Place of search | Date of completion of the search | Examiner |
|---|---|---|
| Munich | 4 March 2025 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 5513

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | | Publication date | Patent family member(s) | | Publication date |
|---|---|---|---|---|---|
| US 11641248 | B2 | 02-05-2023 | EP | 4054094 A1 | 07-09-2022 |
| | | | US | 2022278766 A1 | 01-09-2022 |
| | | | US | 2023224068 A1 | 13-07-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63543331